(19) Europäisches Patentamt
European Patent Office
Office européen des brevets

(11) **EP 4 043 969 A1**

(12) **EUROPÄISCHE PATENTANMELDUNG**

(43) Veröffentlichungstag:
**17.08.2022   Patentblatt 2022/33**

(21) Anmeldenummer: **21156297.0**

(22) Anmeldetag: **10.02.2021**

(51) Internationale Patentklassifikation (IPC):
***G05B 17/02*** (2006.01)

(52) Gemeinsame Patentklassifikation (CPC):
**G05B 13/044;** G05B 2219/2639; H02J 2203/20

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Amthor, Arvid**
**98631 Grabfeld OT Nordheim (DE)**
• **Dölle, Oliver**
**06108 Halle (DE)**
• **Thiem, Sebastian**
**91413 Neustadt an der Aisch (DE)**

(54) **REGELUNG EINER ENERGIETECHNISCHEN ANLAGE**

(57)    Es wird ein Verfahren zur Regelung einer energietechnischen Anlage eines Energiesystems vorgeschlagen, wobei mittels eines mathematischen Modells $f(\theta,X)$ in Abhängigkeit von wenigstens einem Modellparameter $\theta$ aus wenigstens einer Eingangsgröße $X$ wenigstens eine für die Regelung der energietechnischen Anlage vorgesehene Ausgangsgröße $y$ erzeugt wird, und bei welchem der Wert des Modellparameters $\theta$ mittels einer mathematischen Optimierung basierend auf einer Zielfunktion $Z$ bestimmt wird. Erfindungsgemäß umfasst die bei der Optimierung verwendete Zielfunktion $Z$ ein Maß für den Informationsgehalt $I$ der Eingangsgröße $X$ bezüglich des zu bestimmenden Modellparameters $\theta$.

Weiterhin betrifft die Erfindung ein alternatives Verfahren zur Regelung, eine Regelungseinheit sowie ein zugehöriges Energiemanagementsystem

EP 4 043 969 A1

Processed by Luminess, 75001 PARIS (FR)

**Beschreibung**

Die Erfindung betrifft ein Verfahren zur Regelung einer energietechnischen Anlage eines Energiesystems gemäß dem Oberbegriff des Patentanspruches 1, ein Verfahren zur Regelung gemäß dem Oberbegriff des Patentanspruches 12, eine Regelungseinheit gemäß dem Oberbegriff des Patentanspruches 13 sowie ein Energiemanagementsystem gemäß dem Oberbegriff des Patentanspruches 14.

Eine effiziente Koordination von Energiewandlung, Energiespeicherung und/oder Energienutzung für Energiesysteme, insbesondere innerhalb multimodaler und/oder dezentraler Energiesysteme, ist typischerweise basierend auf einem heuristischen Betriebsverfahren nicht mehr möglich. Demnach ist ein Übergang zu modellbasierten Regelungsansätzen, insbesondere zu modellbasierten Energiemanagementsystemen (EMS), vorteilhaft. Modellbasierte Regelungsansätze erfordern es jedoch, dass die Komponenten des Energiesystems (Systemkomponenten/ Anlagen) und deren Verhalten mittels mathematischer Modelle charakterisiert beziehungsweise abgebildet werden.

Typischerweise sind zur Modellierung einer Komponente beziehungsweise einer energietechnischen Anlage des Energiesystems mehrere Modellparameter erforderlich, die das mathematische Modell parametrisieren. Diese Modellparameter müssen möglichst genau bestimmt werden, damit das Modell den tatsächlichen Betrieb der energietechnischen Anlage möglichst genau abbildet. Das Bestimmen der Modellparameter wird ebenfalls als Parameteridentifikation bezeichnet. Typischerweise werden die Parameter, beispielsweise bei der Inbetriebnahme der energietechnischen Anlage, manuell bestimmt. Eine manuelle Parameteridentifikation erhöht jedoch den Aufwand signifikant, sodass dadurch die Kosten, insbesondere bei der Inbetriebnahme der Komponente, deutlich erhöht werden. Zudem ist die Fehleranfälligkeit manueller Parameteridentifikationen im Gegensatz zu automatisierten Parameteridentifikationen erhöht.

Bei automatisierten Parameteridentifikationen, die insbesondere für eine modellprädikative Regelung verwendet werden, stellt sich ebenfalls die Frage der Bestimmung der zur Regelung verwendeten Parameter. Problematisch ist hierbei, insbesondere bei Verwendung von sogenannten Black-Box-Modellen, dass das Bestimmen der Modellparameter basierend auf Messdaten beziehungsweise Trainingsdaten erfolgen sollte, welche den späteren Arbeitsbereich der energietechnischen Anlage möglichst vollständig abdecken. Während des Betriebes der Anlage wird diese jedoch typischerweise in festgelegten und stabilen Arbeitspunkten betrieben. Dadurch ist eine Initialisierung eines Energiemanagementsystems beziehungsweise der zugehörigen Regelung, beispielswiese bei einer Neu- und/oder Wiederinbetriebnahme einer Anlage, zeitaufwendig. Das ist deshalb der Fall, da sicherzustellen ist, dass ausreichend viele Messwerte über annähernd den gesamten Arbeitsbereich für die Parameteridentifikation erfasst wurden.

Somit erfolgt die Parameteridentifikation nach dem Stand der Technik während einer Trainings- beziehungsweise Initialisierungsphase, die zeitlich vor dem geregelten Normalbetrieb der Anlage liegt. Dadurch ergeben sich jedoch die folgenden Nachteile:

Für viele Anlagen ist häufig kein vollständiger Stelleingriff vorhanden. In diesen Fällen ist eine direkte Vorgabe von beispielsweise Solltrajektorien nicht möglich, da die Arbeitspunkte durch die lokalen Regelungseinheiten (Regler) festgelegt werden. Weiterhin können exogene Einflussgrößen, beispielsweise die Außentemperatur und/oder eine Last, nicht aktiv eingestellt werden. Somit müsste die Betriebsplanung der Anlage in Abhängigkeit von diesen nicht steuerbaren Eingangsgrößen erfolgen, damit Messwerte über den kompletten Arbeitsbereich der Anlage erfasst werden können.

Insbesondere bei sogenannten Brownfield-Energiesystemen beziehungsweise Brownfield-Anlagen steht lediglich eine kurze Zeit für eine Trainings- beziehungsweise Initialisierungsphase zur Verfügung.

Eine manuelle Vorgabe von Solltrajektorien erhöht den Aufwand bei der Inbetriebnahme und somit wiederum die damit verbundenen Kosten. Gleichzeitig ist eine automatisierte Vorgabe von Solltrajektorien schwierig, da Systemrandbedingungen, beispielsweise minimale und/oder maximale Temperaturen und/oder Drücke, beachtet werden müssten und somit implizit Anlagenbeziehungsweise Systemwissen vorausgesetzt wird.

Der vorliegenden Erfindung liegt die Aufgabe zugrunde, ein Verfahren zur modellbasierten Regelung einer energietechnischen Anlage mit einer verbesserten Parameteridentifikation bereitzustellen, die insbesondere eine Parameteridentifikation während des Betriebes der Anlage ermöglicht.

Die Aufgabe wird durch ein Verfahren mit den Merkmalen des unabhängigen Patentanspruches 1, durch ein Verfahren mit den Merkmalen des unabhängigen Patentanspruches 12, durch eine Regelungseinheit mit den Merkmalen des unabhängigen Patentanspruches 13 sowie durch ein Energiemanagementsystem mit den Merkmalen des unabhängigen Patentanspruches 14 gelöst. In den abhängigen Patentansprüchen sind vorteilhafte Ausgestaltungen und Weiterbildungen der Erfindung angegeben.

Das erfindungsgemäße Verfahren zur Regelung einer energietechnischen Anlage eines Energiesystems, wobei mittels eines mathematischen Modells $f(\theta,X)$ in Abhängigkeit von wenigstens einem Modellparameter $\theta$ aus wenigstens einer Eingangsgröße $X$ wenigstens eine für die Regelung der energietechnischen Anlage vorgesehene Ausgangsgröße $y$ erzeugt wird, wobei der Wert des Modellparameters $\theta$ mittels einer mathematischen Optimierung basierend auf einer Zielfunktion $Z$ bestimmt wird, ist gekennzeichnet dadurch, dass die bei der Optimierung verwendete Zielfunktion $Z$ ein Maß für den Informationsgehalt $I$ der Eingangsgröße $X$ bezüglich des zu bestimmenden Modellparameters $\theta$ umfasst.

Das beziehungsweise die erfindungsgemäßen Verfahren und/oder eine oder mehrere Funktionen, Merkmale und/oder Schritte des beziehungsweise der erfindungsgemäßen Verfahren und/oder einer seiner oder ihrer Ausgestaltungen können computergestützt sein.

Vorliegend basiert die Regelung auf einem mathematischen Modell der energietechnischen Anlage, sodass diese eine modellbasierte Regelung, insbesondere eine modellprädikative Regelung, ausbildet.

Aus struktureller Sicht definiert insbesondere der IPCC Fifth Assessment Report ein Energiesystem als: "Alle Komponenten, die sich auf die Erzeugung, Umwandlung, Lieferung und Nutzung von Energie beziehen." Das Energiesystem ist insbesondere ein Gebäude, beispielsweise ein Bürogebäude und/oder ein Wohngebäude, eine industrielle Anlage, ein Campus, ein Stadtteil, eine Gemeinde und/oder dergleichen.

Energiesysteme umfassen typischerweise mehrere Komponenten beziehungsweise energietechnische Anlagen, beispielsweise Energiewandlungsanlagen, Verbrauchsanlagen und/oder Speicheranlagen. Multimodale Energiesysteme sind Energiesysteme, die mehrere Energieformen erzeugen und/oder bereitstellen. Insbesondere stellt ein multimodales Energiesystem für einen Energieverbraucher, beispielsweise ein Gebäude, eine Industrieanlage oder private Anlagen, eine oder mehrere Energieformen bereit, wobei die Bereitstellung insbesondere durch eine Umwandlung verschiedener Energieformen, durch einen Transport verschiedener Energieformen und/oder durch gespeicherte Energieformen erfolgt. Mit anderen Worten werden die verschiedenen Energieformen, beispielsweise Wärme, Kälte oder elektrische Energie, mittels des multimodalen Energiesystems bezüglich ihrer Erzeugung, ihrer Bereitstellung und/oder ihrer Speicherung durch seine energietechnischen Anlagen gekoppelt.

Als energietechnische Anlagen kann das Energiesystem eine oder mehrere der folgenden Komponenten umfassen: Stromgeneratoren, Kraftwärmekopplungsanlagen, insbesondere Blockheizkraftwerke, Gasboiler, Dieselgeneratoren, Elektrokessel, Wärmepumpen, Kompressionskältemaschinen, Absorptionskältemaschinen, Pumpen, Fernwärmenetzwerke, Energietransferleitungen, Windkrafträder oder Windkraftanlagen, Photovoltaikanlagen, Biomasseanlagen, Biogasanlagen, Müllverbrennungsanlagen, industrielle Anlagen, konventionelle Kraftwerke und/oder dergleichen.

Eine Optimierung im Sinne der vorliegenden Erfindung ist ein Verfahren zur Minimierung oder Maximierung der Zielfunktion $Z$ beziehungsweise ihres Wertes. Die Minimierung beziehungsweise Maximierung der Zielfunktion erfolgt typischerweise numerisch. Die Zielfunktion charakterisiert hierbei eine Eigenschaft oder eine Größe der energietechnischen Anlage und/oder des Energiesystems, beispielsweise Kohlenstoffdioxidemissionen oder einen Gesamtenergieverbrauch. Typischerweise wird kein exaktes Minimum oder Maximum der Zielfunktion erreicht, sondern es ist ausreichend diesem, beispielsweise durch ein Festlegen eines Schwellenwertes, hinreichend nahe zu kommen. Weiterhin erfolgt die Optimierung typischerweise unter einer Berücksichtigung mehrerer Nebenbedingungen.

Gemäß der vorliegenden Erfindung wird die für die Regelung der energietechnischen Anlage vorgesehene Ausgangsgröße $y$ basierend auf dem mathematischen Modell $f(\theta,X)$ erzeugt. Hierbei ist $X$ die Eingangsgröße der Regelung, die beispielsweise auf Messdaten beziehungsweise Messwerten basiert, und $\theta$ die Modellparameter der modellbasierten Regelung die bestimmt werden sollen (Parameteridentifikation). Die Eingangsgröße $X$ ist typischerweise als Matrix ausgebildet. Eine oder mehrere Eingangsgrößen $X$ sowie eine oder mehrere Ausgangsgrößen $y$, die beispielsweise in Form eines Vektors zusammengefasst sind, können vorgesehen sein. Das mathematische Modell $f(\theta,X)$ ist insbesondere ein Black-Box-Modell der energietechnischen Anlage. Diesem kann zusätzlich ein Rauschterm hinzugefügt werden.

Die Regelung basiert auf den Modellparameter $\theta$. Mehrere Modellparameter, die beispielsweise in Form eines Vektors zusammengefasst werden, können vorgesehen sein. Der beziehungsweise die Modellparameter $\theta$ werden mittels der Optimierung (Optimierungsverfahren) beziehungsweise mittels einer mathematischen Optimierung bestimmt. Die Optimierung basiert auf der Zielfunktion $Z$, die minimiert oder maximiert wird. Mit anderen Worten wird der Modellparameter beziehungsweise werden die Modellparameter $\theta$ dadurch bestimmt, dass diese die Zielfunktion beziehungsweise ihren Wert extremalisieren, das heißt maximieren oder minimieren. Dadurch erfolgt vorteilhafterweise eine automatisierte und im Sinne der Zielfunktion bestmögliche Parameteridentifikation.

Erfindungsgemäß wird zum Bestimmen des Modellparameters $\theta$ beziehungsweise dessen Werts eine Zielfunktion $Z$ verwendet, die ein Maß für den Informationsgehalt $I$ der Eingangsgröße $X$ bezüglich des zu bestimmenden Modellparameters $\theta$ umfasst. Die Eingangsgrößen basieren typischerweise auf Messdaten. Hierbei umfasst die Zielfunktion ein Maß für den Informationsgehalt $I$ dieser Messdaten bezüglich des Modellparameters $\theta$ der modellbasierten Regelung. Ein Maß ist grundsätzlich eine Funktion, die dem Informationsgehalt beziehungsweise der Information, die die Eingangsgrößen/Eingangsdaten/Messdaten bezüglich des Modellparameters aufweisen, eine Zahl zuordnet. Mit anderen Worten quantifiziert das Maß den Informationsgehalt der Eingangsgrößen bezüglich des Modellparameters. Durch die erfindungsgemäße Berücksichtigung dieses Maßes beziehungsweise der Maßfunktion innerhalb der Zielfunktion, die für die Bestimmung des Modellparameters verwendet wird, wird der Informationsgehalt der Eingangsgrößen bezüglich des Modellparameters bei der Optimierung berücksichtigt. Mit anderen Worten umfasst die Zielfunktion den Informationsgehalt der Messdaten bezüglich des Modellparameters. Hierbei ist es von besonderem Vorteil, diesen Informationsgehalt im Rahmen der verwendeten Zielfunktion zu maximieren. Dies kann vorteilhafterweise während des Betriebes der energietechnischen Anlage erfolgen. Mit anderen Worten werden zur Identifizierung des Modellparameters beziehungsweise der Modellparameter der Regelung, keine Sollwerttrajektorien manuell vorgegeben, sondern es wird der Informationsgehalt der Eingangsgrößen, insbesondere der Eingangsmessdaten, während des Betriebes der energietechnischen Anlage maximiert. Ein maximaler Informationsgehalt der Eingangsgrößen liegt beispielsweise bei großer Varianz und geringer Kreuzkorrelation der zur Eingangsgröße zugehörigen Messwerte beziehungsweise Messdaten vor.

Ergänzend zum Informationsgehalt können weiterhin die Qualität (Modellgenauigkeit und Unsicherheit) der bisher ermittelten Modellparameter berücksichtigt werden. Beispielsweise werden durch eine angepasste Beschränkung der Prozessgrößen im Optimierungsproblem die Komponenten gezielt in Arbeitsbereichen eingesetzt werden, welche hohe Parameterunsicherheiten aufweisen.

Durch das Berücksichtigen des Informationsgehaltes der Eingangsgrößen bezüglich des Modellparameters innerhalb der für das Bestimmen des Modellparameters vorgesehenen Optimierung weist die Erfindung insbesondere die folgenden Vorteile auf:

Die Modellparameter können über ihren gesamten Wertebereich deutlich schneller validiert werden. Dies ist insbesondere bei der Erst- beziehungsweise Neuinbetriebnahme des Energiesystems und/oder der energietechnischen Anlage und/oder weiteren Komponenten vorteilhaft, damit ein verbesserter und möglichst fehlerfreier und/oder effizienter Betrieb sichergestellt werden kann.

Eine strenge Unterscheidung zwischen Inbetriebsetzungs- und Betriebsphase ist nicht mehr erforderlich. Vielmehr können kontinuierlich im laufenden Betrieb für die Identifikation bestmögliche Messwerte (Eingangsgrößen) erzeugt werden. Dies kann ohne Verletzung von Randbedingungen sowie ohne unzulässige Betriebszustände des Energiesystems beziehungsweise der energietechnischen Anlage erfolgen.

Die vorliegende Erfindung ist insbesondere für Energiesysteme mit reduziertem Stelleingriff und/oder Brownfield-Anlagen besonders vorteilhaft. Durch das hinterlegte Modell, welches beispielsweise durch Modellgleichungen ausgebildet wird, sowie der Messung von nicht steuerbaren Eingangsgrößen kann ein zugehöriges Energiemanagementsystem eine optimale Einsatzplanung hinsichtlich einer zielgerichteten und schnellen Identifikation der Modellparameter vorgeben.

Das erfindungsgemäße alternative Verfahren zur Regelung einer energietechnischen Anlage eines Energiesystems, wobei mittels eines mathematischen Modells $f(\theta,X)$ in Abhängigkeit von wenigstens einem Modellparameter $\theta$ aus wenigstens einer Eingangsgröße $X$ wenigstens eine für die Regelung der energietechnischen Anlage vorgesehene Ausgangsgröße $y$ erzeugt wird, wobei mehrere Werte des Modellparameters $\theta$ mittels einer mathematischen Optimierungen basierend auf einer Gütefunktion $J$ bestimmt werden, ist gekennzeichnet dadurch, dass der für die Regelung vorgesehene Wert des Modellparameters $\theta$ aus den bestimmten Werten durch eine Maximierung eines Maßes für den Informationsgehalt $I$ der Eingangsgröße $X$ bezüglich des zu bestimmenden Modellparameters $\theta$ bestimmt wird.

Mit anderen Worten kann die modellprädikative Regelung gemäß der Optimierung mit der Gütefunktion $J$ mehrere gleichwertige Lösungen aufweisen, das heißt die Lösung kann nicht eindeutig bestimmt sein. In diesem Fall kann der optimale Modellparameter aus den mehreren bereits bestimmten Modellparameter (Lösungen) dadurch ermittelt werden, dass für dessen Wert der Informationsgehalt $I$ der Eingangsgröße $X$ bezüglich des zu bestimmenden Modellparameters $\theta$ maximiert wird. Die Maximierung des Informationsgehaltes der Eingangsgröße beziehungsweise der Messdaten/Trainingsdaten ist somit der Optimierung der Gütefunktion nachgelagert.

Es ergeben sich zum erfindungsgemäßen Verfahren gleichartige und gleichwertige Vorteile und/oder Ausgestaltungen.

Alternativ oder ergänzend kann die Lösung mittels des größten Abstand, beispielsweise euklidischem Abstand, zu den bisher erfassten Messdaten/Trainingsdaten bestimmt beziehungsweise ausgewählt werden. Weiterhin kann die Lösung über einen Arbeitsbereich, der die größte Modellungenauigkeit sowie über eine maximale Varianz der Stellgrößen/Stellsignale ermittelt werden.

Die erfindungsgemäße Regelungseinheit zur Regelung einer energietechnischen Anlage eines Energiesystems ist dazu ausgebildet, mittels eines mathematischen Modells $f(\theta,X)$ in Abhängigkeit von wenigstens einem Modellparameter $\theta$ aus wenigstens einer Eingangsgröße $X$ wenigstens eine Ausgangsgröße $y$ zur Regelung der Anlage zu erzeugen, wobei die Regelungseinheit eine Optimierungseinheit umfasst, mittels welcher der Wert des Modellparameters $\theta$ mittels einer mathematischen Optimierung basierend auf einer Zielfunktion $Z$ bestimmbar ist. Die erfindungsgemäße Regelungseinheit ist gekennzeichnet dadurch, dass die Optimierungseinheit derart ausgestaltet ist, dass die bei der Optimierung verwendete Zielfunktion $Z$ ein Maß für den Informationsgehalt $I$ der Eingangsgröße $X$ bezüglich des zu bestimmenden Modellparameters $\theta$ umfasst.

Die Regelungseinheit kann ebenfalls als Steuereinheit bezeichnet werden, wobei vorliegend die Begriffe Steuern und Regeln nicht streng unterschieden werden und als äquivalent angesehen werden.

Es ergeben sich zum erfindungsgemäßen Verfahren gleichartige und gleichwertige Vorteile und/oder Ausgestaltungen der erfindungsgemäßen Regelungseinheit.

Das Energiemanagementsystem zur Steuerung von mehreren energietechnischen Anlagen eines Energiesystems ist dadurch gekennzeichnet, dass dieses wenigstens eine erfindungsgemäße Regelungseinheit und/oder einer ihrer Ausgestaltungen umfasst.

Insbesondere ist das Energiemanagementsystem zur Steuerung eines Gebäudes vorgesehen.

Es ergeben sich zum erfindungsgemäßen Verfahren beziehungsweise zur erfindungsgemäßen Regelungseinheit gleichartige und gleichwertige Vorteile und/oder Ausgestaltungen.

Gemäß einer vorteilhaften Ausgestaltung der Erfindung wird als Maß für den Informationsgehalt $I$ die Fisher-Information $I$ der Eingangsgrößen $X$ bezüglich des Modellparameters $\theta$ verwendet.

Die Fisher-Information ist ein vorteilhaftes Informationsmaß (Maß für den Informationsgehalt) einer statistischen Zufallsvariablen (vorliegend die Eingangsgröße/Messdaten) bezüglich eines unbekannten Parameters, vorliegend der Modellparameter $\theta$. Insbesondere ermöglicht die Fisher-Information vorteilhafterweise eine Aussage über die Qualität einer Parameterschätzung zu treffen. Somit ist die Fisher-Information ein besonders vorteilhaftes Informationsmaß zum Erfassen beziehungsweise quantifizieren der Information/Informationsgehaltes, welchen die Eingangsgröße $X$ bezüglich des Modellparameters $\theta$ trägt. Für die Bestimmung des Messparameters ist es - wie bereits obenstehend beschrieben - vorteilhaft, wenn die Eingangsgrößen/Messdaten einen hohen Informationsgehalt bezüglich des Messparameters aufweisen. Die Zielfunktion umfasst die Fisher-Information und somit den genannten Informationsgehalt, sodass dieser, gegebenenfalls durch eine Wahl des entsprechenden Vorzeichens, bei der Extremalisierung der Zielfunktion maximiert werden kann. Mit anderen Worten wird bei der Optimierung ebenfalls die Fisher-Information maximiert, wobei weitere Terme der Zielfunktion, die maximiert oder minimiert werden sollen, vorgesehen sein können. Im Hinblick auf die genannten weiteren Terme wird somit die Fisher-Information bestmöglich maximiert.

In einer vorteilhaften Weiterbildung der Erfindung wird die Fisher-Information $I$ für $n$ Modellparameter $\theta_1,...,\theta_n$ mittels des Erwartungswertes $E$ einer Verteilung der Modellparameter $\theta_1,...,\theta_n$ und der zugehörigen logarithmischen Plausibilitätsfunktion $L$ (Log-Likelihood-Funktion) durch

$$\mathcal{I}_{i,j}(\theta) = -E\left[\frac{\partial}{\partial \theta_i \partial \theta_j} L(\theta_1, ..., \theta_n, y_1, ..., y_k)\right],$$

für $i,j$ = 1,...,$n$ gebildet.

Mit anderen Worten ist die Fisher-Information als Matrix durch den Erwartungswert der zweiten partiellen Ableitungen Log-Likelihood-Funktion der Wahrscheinlichkeitsdichte der Eingangsgrößen nach den Modellparametern gegeben. Ist $f_\theta(X)$ die Wahrscheinlichkeitsdichte der Eingangsgrößen $X$ bezüglich des Modellparameters $\theta$, so ist die Log-Likelihood-Funktion $L = \ln f_\theta(X)$.

Gemäß einer vorteilhaften Ausgestaltung der Erfindung wird die Zielfunktion $Z$ durch eine Linearkombination aus einer Gütefunktion $J$ der energietechnischen Anlagen und/oder des Energiesystems und der Fisher-Information $I$ gebildet.

Mit anderen Worten ist es von Vorteil, die Zielfunktion gemäß

$$Z = c_1 J - c_2 \mathcal{I}$$

mit den Koeffizienten $c_1$, $c_2$ zu bilden. Die Koeffizienten können ebenfalls als Gewichtungsfaktoren bezeichnet und angesehen werden. Die Gütefunktion $J$ ist die für die energetische Anlage eigentlich vorgesehene Zielfunktion. Sie beschreibt beziehungsweise quantifiziert das primäre Ziel der Regelung beziehungsweise des Betriebes der Anlage, beispielsweise mit minimaler Kohlenstoffdioxidemission, minimalen Primärenergieeinsatz, minimaler Gesamtenergie und/oder minimalen Betriebskosten. Typischerweise wird die Gütefunktion minimiert, sodass bei einer Minimierung der Zielfunktion $Z$ die Fisher-Information, deren Wert maximiert werden soll, mit einem von der Gütefunktion verschiedenen Vorzeichen eingeht. Die Koeffizienten der genannten Linearkombination aus Gütefunktion und Fisher-Information können in Abhängigkeit des Anwendungsfalles sowie gemäß des Status der Parameteridentifikation eingestellt beziehungsweise verändert werden. Insbesondere ist es von besonderem Vorteil, wenn mit fortschreitendem Identifikationsgrad beziehungsweise Bestimmungsgrad der Modellparameter $c_2$ gegenüber $c_1$ verkleinert wird, beispielsweise $c_2 \to 0$ und $c_1 \to 1$. Bei einer signifikanten Parameteränderung beziehungsweise Modellabweichung könnte vorteilhafterweise $c_2$ über einen festgelegten Zeitraum erhöht werden, bis ein ausreichender Genauigkeitsgrad der Parameteridentifikation erreicht ist. Weiterhin sind anlagenspezifische Gewichtungsfaktoren vorgesehen. Beispielsweise werden Anlagen, die eine bezüglich der weiteren Anlagen höhere Unsicherheit oder eine geringere Modellgenauigkeit aufweisen in der dann für die energietechnischen Anlagen gesamtheitlichen Zielfunktion $Z$ stärker gewichtet.

In einer vorteilhaften Weiterbildung der Erfindung werden somit die Koeffizienten der Linearkombination in Abhängigkeit der Gesamtlaufzeit der energietechnischen Anlage und/oder von der Größe einer Änderung des Modellparameters eingestellt.

Gemäß einer vorteilhaften Ausgestaltung der Erfindung wird die Eingangsgröße $X$ mittels bezüglich der energietechnischen Anlage erfasster Eingangsdaten *x* und/oder Stellgrößen der Regelung gebildet.

Typischerweise umfasst die Eingangsgröße *X* als Matrix die Eingangsdaten/Messdaten *x* und die Stell- beziehungsweise Steuergrößen *u* der Regelung. Vorteilhafterweise weist dadurch das Modell lediglich eine matrixwertige Eingangsgröße, nämlich die Matrix *X*, auf. Dadurch kann vorteilhafterweise die Regelung, das Modell sowie die Optimierung zusammengefasst, vereinfacht und/oder übersichtlicher ausgestaltet werden. Ein solches Reduzieren beziehungsweise Kombinieren auf eine Eingangsgröße ist typischerweise möglich.

Werden jedoch alle wesentlichen Abhängigkeiten explizit ausgeschrieben, so ist die oben genannte Zielfunktion durch *Z* =

$$c_1 \cdot J(u, x, y, \theta) - c_2 \cdot \mathfrak{I}(u, x, y, \theta)$$

gegeben, wobei die Argumente *u,x,y,θ* der Gütefunktion und der Fisher-Information als Vektoren ausgebildet sind. Mittels der Optimierung werden basierend auf der genannten Zielfunktion die Stellgrößen/Steuergrößen sowie die Modellparameter bestimmt.

In einer vorteilhaften Ausgestaltung der Erfindung wird die Ausgangsgröße durch *y* = *f*(*θ,X*) + *ε* mit dem Modellfehler *ε* modelliert, wobei *ε* ein weißes Rauschen ist.

Mit anderen Worten wird das Modell über die Modellfunktion *f*(*θ,X*) durch *y* = *f*(*θ,X*) + *ε* mit dem Modellfehler *ε* gebildet. Hierbei ist *ε* ein weißes Rauschen beziehungsweise ein weißer Rauschterm. Weißes Rauschen ist hierbei durch die Zufallsvariable *ε* modelliert, welche normalverteilt ist und eine verschwindende Autokorrelation sowie keine Homoskedastizität aufweist. Dadurch kann die Fisher-Information zu

$$\mathfrak{I} = X^T X / \sigma^2$$

vereinfacht werden, wobei hierbei die Eingangsgröße *X* wiederum eine Matrix ist. Die Varianz der Grundgesamtheit $\sigma^2$ kann vorteilhafterweise mittels des Modellfehlers gemäß $\hat{\sigma}^2 = \hat{\varepsilon}^T \hat{\varepsilon}/(k - n)$ abgeschätzt werden. Vorteilhaftweise kann dadurch der Informationsgehalt der Eingangsdaten beziehungsweise der Eingangsgröße bezüglich der zu bestimmenden beziehungsweise zu identifizierenden Parametern durch eine Maximierung von $X^T X$ erhöht werden. Beispielsweise erfolgt dies durch eine Maximierung der Spur (A-optimales Kriterium), der Determinante (D-optimales Kriterium) oder des maximalen Eigenwertes (E-optimales Kriterium) von $X^T X$ beziehungsweise der Fisher-Information

$$\mathfrak{I} \sim X^T X \, .$$

Gemäß einer vorteilhaften Ausgestaltung der Erfindung ist der Informationsgehalt *I* der verwendeten Eingangsgröße *X* bezüglich des Modellparameters *θ* oberhalb eines festgelegten minimalen Informationsgehaltes.

Vorteilhafterweise werden dadurch die Eingangsgrößen beziehungsweise die zugehörigen Messdaten bereits vorab selektiert beziehungsweise ausgewählt. Lediglich Messdaten, deren Informationsgehalt oberhalb des festgelegten minimalen Informationsgehaltes liegen (untere Grenze), werden verwendet. Dadurch wird die Bestimmung des Modellparameters beziehungsweise der Modellparameter verbessert. Beispielsweise wird der festgelegte minimale Informationsgehalt als Nebenbedingung bei der Optimierung berücksichtigt. Ein adaptives Einstellen des minimalen Informationsgehaltes in Abhängigkeit des Anwendungsfalls und/oder mit fortschreitender Zeit kann vorgesehen sein.

In einer vorteilhaften Ausgestaltung der Erfindung erfolgt das Bestimmen des Wertes des Modellparameters *θ* für die Regelung während des Betriebes der energietechnischen Anlage.

Vorteilhafterweise ermöglicht die vorliegende Erfindung durch das Berücksichtigen des Informationsgehaltes eine Parameteridentifikation (Bestimmen des Modellparameters beziehungsweise seines Wertes) während des Betriebs der energietechnischen Anlage, sodass das erfindungsgemäße Verfahren und/oder einer seiner Ausgestaltungen vorteilhafterweise während des Betriebs der energietechnischen Anlage eingesetzt werden. Insbesondere wird dadurch eine stetige Verbesserung der Regelung über den Betrieb der Anlage erreicht. Weiterhin kann auf Veränderungen effizient reagiert werden. Alternativ oder ergänzend kann die vorliegende Erfindung weiterhin während der Erst- beziehungsweise Neuinbetriebnahme der Anlage und/oder des Energiesystems verwendet werden.

Mit anderen Worten ist es von Vorteil, wenn das Bestimmen des Wertes des Modellparameters *θ* für die Regelung während einer Inbetriebnahme der energietechnischen Anlage erfolgt.

Dadurch wird vorteilhafterweise die Inbetriebnahme der energetischen Anlage zeitlich verkürzt.

Gemäß einer vorteilhaften Ausgestaltung der Erfindung wird die energietechnische Anlage zum Ermitteln des Wertes des Modellparameters $\theta$ innerhalb von Arbeitsbereichen betrieben, die durch eine Parameterunsicherheit oberhalb eines festgelegten Schwellenwertes gekennzeichnet sind.

Dadurch wird vorteilhafterweise die modellbasierte Regelung weiter verbessert.

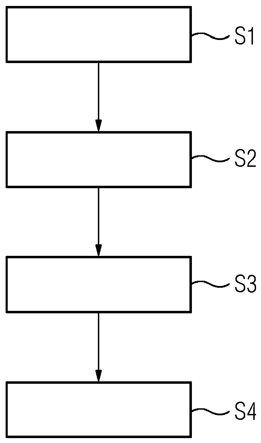

Weitere Vorteile, Merkmale und Einzelheiten der Erfindung ergeben sich aus den im Folgenden beschriebenen Ausführungsbeispielen sowie anhand der Zeichnungen. Dabei zeigt die einzige Figur ein schematisiertes Verlaufsdiagramm eines Verfahrens gemäß einer Ausgestaltung der vorliegenden Erfindung.

Gleichartige, gleichwertige oder gleichwirkende Elemente können in der Figur mit denselben Bezugszeichen versehen sein.

In einem ersten Schritt S1 werden Messwerte bezüglich der Eingangsgrößen einer modellprädikativen Regelung erfasst. Die Regelung ist zur Regelung beziehungsweise zum Steuern einer energietechnischen Anlage eines Energiesystems, insbesondere eines Gebäudes vorgesehen. Die erfassten Messwerte können zusammen mit Stellgrößen der modellprädikativen Regelung zu einer matrixwertigen Eingangsgröße $X$ zusammengefasst beziehungsweise als solche repräsentiert werden.

In einem zweiten Schritt S2 wird ein Modell $f(\theta,X)$ für die modellprädikative Regelung bereitgestellt. Hierbei sind $\theta$ Modellparameter. Die Modellparameter $\theta$ müssen für die Regelung identifiziert beziehungsweise bestimmt werden.

Die Modellparameter $\theta$ werden in einem dritten Schritt S3 mittels einer Optimierung, die auf einer Zielfunktion $Z$ basiert bestimmt beziehungsweise identifiziert. Mit anderen Worten werden deren Werte durch die genannte Optimierung ermittelt beziehungsweise festgelegt. Hierbei basiert die Optimierung auf einer Zielfunktion, die neben einer Gütefunktion der energietechnischen Anlage ein Maß für den Informationsgehalt $I$ der Eingangsgröße $X$ bezüglich des zu bestimmenden Modellparameters $\theta$ umfasst. Als Informationsmaß wird besonderes bevorzugt die Fisher-Information verwendet. Bevorzugt wird die Zielfunktion mittels einer Linearkombination der Gütefunktion und des Informationsmaßes gebildet. Hierbei soll die Gütefunktion typischerweise minimiert und der Informationsgehalt, der mittels des Informationsmaßes quantifiziert wird, maximiert werden. Sind die Modellparameter bestimmt, können die Ausgangsgrößen ebenfalls ermittelt werden.

In einem vierten Schritt S4 kann somit basierend auf den Ausgangsgrößen die eigentliche Regelung der energietechnischen Anlage erfolgen. Somit erfolgt die Regelung in Abhängigkeit der Eingangsgrößen gemäß des Modells und des bestimmten beziehungsweise ermittelten Modellparameters. Dies kann während des Betriebes der energietechnischen Anlage erfolgen, sodass der Modellparameter und somit die Regelung insgesamt stetig verbessert werden beziehungsweise auf sich veränderte Betriebsumstände reagieren und sich anpassen kann. Hierzu ist insbesondere kein manuelles Eingreifen erforderlich.

Die vorliegende Erfindung ermöglicht somit eine modellprädikative Regelung unter Berücksichtigung des Informationsgehaltes der Messdaten/Trainingsdaten/Eingangsgrößen.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

Bezugszeichenliste

S1 erster Schritt
S2 zweiter Schritt
S3 dritter Schritt
S4 vierter Schritt

**Patentansprüche**

1. Verfahren zur Regelung einer energietechnischen Anlage eines Energiesystems, wobei mittels eines mathematischen Modells $f(\theta,X)$ in Abhängigkeit von wenigstens einem Modellparameter $\theta$ aus wenigstens einer Eingangsgröße $X$ wenigstens eine für die Regelung der energietechnischen Anlage vorgesehene Ausgangsgröße $y$ erzeugt wird, wobei der Wert des Modellparameters $\theta$ mittels einer mathematischen Optimierung basierend auf einer Zielfunktion $Z$ bestimmt wird, **gekennzeichnet dadurch, dass** die bei der Optimierung verwendete Zielfunktion $Z$ ein Maß für den Informationsgehalt $I$ der Eingangsgröße $X$ bezüglich des zu bestimmenden Modellparameters $\theta$ umfasst.

2. Verfahren gemäß Anspruch 1, **gekennzeichnet dadurch, dass** als Maß für den Informationsgehalt $I$ die Fisher-Information $I$ der Eingangsgrößen $X$ bezüglich des Modellparameters $\theta$ verwendet wird.

3. Verfahren gemäß Anspruch 2, **gekennzeichnet dadurch, dass** die Fisher-Information $I$ für $n$ Modellparameter $\theta_1,...,\theta_n$ mittels des Erwartungswertes $E$ einer Verteilung der Modellparameter $\theta_1,...,\theta_n$ und der zugehörigen logarithmischen Plausibilitätsfunktion $L$ durch

$$\mathcal{J}_{i,j}(\theta) = -E\left[\frac{\partial}{\partial \theta_i \partial \theta_j} L(\theta_1, ..., \theta_n, y_1, ..., y_k)\right],$$

für $i,j = 1, ..., n$ gebildet wird.

4. Verfahren gemäß Anspruch 3, **gekennzeichnet dadurch, dass** die Zielfunktion $Z$ durch eine Linearkombination aus einer Gütefunktion $J$ der energietechnischen Anlage oder des Energiesystems und der Fisher-Information $I$ gebildet wird.

5. Verfahren gemäß Anspruch 4, **gekennzeichnet dadurch, dass** Koeffizienten der Linearkombination in Abhängigkeit der Gesamtlaufzeit der energietechnischen Anlage und/oder von der Größe einer Änderung des Modellparameters eingestellt werden.

6. Verfahren gemäß einem der vorhergehenden Ansprüche, **gekennzeichnet dadurch, dass** die Eingangsgröße $X$ mittels bezüglich der energietechnischen Anlage erfasster Eingangsdaten $x$ und/oder Stellgrößen $u$ der Regelung gebildet wird.

7. Verfahren gemäß einem der vorhergehenden Ansprüche, **gekennzeichnet dadurch, dass** die Ausgangsgröße durch $y = f(\theta,X) + \varepsilon$ mit dem Modellfehler $\varepsilon$ modelliert wird, wobei $\varepsilon$ ein weißes Rauschen ist.

8. Verfahren gemäß einem der vorhergehenden Ansprüche, **gekennzeichnet dadurch, dass** der Informationsgehalt $I$ der verwendeten Eingangsgröße $X$ bezüglich des Modellparameters $\theta$ oberhalb eines festgelegten minimalen Informationsgehaltes ist.

9. Verfahren gemäß einem der vorhergehenden Ansprüche, **gekennzeichnet dadurch, dass** das Bestimmen des Wertes des Modellparameters $\theta$ für die Regelung während des Betriebes der energietechnischen Anlage erfolgt.

10. Verfahren gemäß einem der vorhergehenden Ansprüche, **gekennzeichnet dadurch, dass** das Bestimmen des Wertes des Modellparameters $\theta$ für die Regelung während einer Inbetriebnahme der energietechnischen Anlage erfolgt.

11. Verfahren gemäß einem der vorhergehenden Ansprüche, **gekennzeichnet dadurch, dass** die energietechnische Anlage zum Ermitteln des Wertes des Modellparameters $\theta$ innerhalb von Arbeitsbereichen betrieben wird, die durch eine Parameterunsicherheit oberhalb eines festgelegten Schwellenwertes gekennzeichnet sind.

12. Verfahren zur Regelung einer energietechnischen Anlage eines Energiesystems, wobei mittels eines mathematischen Modells $f(\theta,X)$ in Abhängigkeit von wenigstens einem Modellparameter $\theta$ aus wenigstens einer Eingangsgröße $X$ wenigstens eine für die Regelung der energietechnischen Anlage vorgesehene Ausgangsgröße $y$ erzeugt wird, wobei mehrere Werte des Modellparameters $\theta$ mittels einer mathematischen Optimierung basierend auf einer Gütefunktion $J$ bestimmt werden, **gekennzeichnet dadurch, dass** der für die Regelung vorgesehene Wert des Modellparameters $\theta$ aus den bestimmten Werten durch eine Maximierung eines Maßes für den Informationsgehalt $I$ der Eingangsgröße $X$ bezüglich des zu bestimmenden Modellparameters $\theta$ bestimmt wird.

13. Regelungseinheit zur Regelung einer energietechnischen Anlage eines Energiesystems, die dazu ausgebildet ist, mittels eines mathematischen Modells $f(\theta,X)$ in Abhängigkeit von wenigstens einem Modellparameter $\theta$ aus wenigstens einer Eingangsgröße $X$ wenigstens eine Ausgangsgröße $y$ zur Regelung der Anlage zu erzeugen, wobei die Regelungseinheit eine Optimierungseinheit umfasst, mittels welcher der Wert des Modellparameters $\theta$ mittels einer mathematischen Optimierung basierend auf einer Zielfunktion $Z$ bestimmbar ist, **gekennzeichnet dadurch, dass** die Optimierungseinheit derart ausgestaltet ist, dass die bei der Optimierung verwendete Zielfunktion $Z$ ein Maß für den Informationsgehalt $I$ der Eingangsgröße $X$ bezüglich des zu bestimmenden Modellparameters $\theta$ umfasst.

14. Energiemanagementsystem zur Steuerung von mehreren energietechnischen Anlagen eines Energiesystems, **da-**

**durch gekennzeichnet, dass** dieses wenigstens eine Regelungseinheit gemäß Anspruch 13 umfasst.

15. Energiemanagementsystem gemäß Anspruch 14, **dadurch gekennzeichnet, dass** die Regelungseinheit zur Regelung der mehreren energietechnischen Anlagen des Energiesystems ausgebildet ist, wobei hierzu das Maß für den Informationsgehalt $I$ durch eine Summe der Maße der Informationsgehalte der einzelnen energietechnischen Anlage gebildet wird.

```
┌─────────────────────────┐
│                         │──⌐ S1
└─────────────────────────┘
            │
            ▼
┌─────────────────────────┐
│                         │──⌐ S2
└─────────────────────────┘
            │
            ▼
┌─────────────────────────┐
│                         │──⌐ S3
└─────────────────────────┘
            │
            ▼
┌─────────────────────────┐
│                         │──⌐ S4
└─────────────────────────┘
```

Europäisches
Patentamt

European
Patent Office

Office européen
des brevets

**EUROPÄISCHER RECHERCHENBERICHT**

Nummer der Anmeldung

EP 21 15 6297

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2019 207061 A1 (SIEMENS AG [DE]) 19. November 2020 (2020-11-19) * Absätze [0002], [0003], [0010] - [0025], [0044] - [0045], [0064] - [0065] * ----- | 1-15 | INV. G05B17/02 |

RECHERCHIERTE
SACHGEBIETE (IPC)

G05B
H02J

Der vorliegende Recherchenbericht wurde für alle Patentansprüche erstellt

| Recherchenort | Abschlußdatum der Recherche | Prüfer |
|---|---|---|
| München | 9. Juli 2021 | Bergler, Christian |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

..........................................................................................

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 15 6297

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-07-2021

| Im Recherchenbericht angeführtes Patentdokument | Datum der Veröffentlichung | Mitglied(er) der Patentfamilie | Datum der Veröffentlichung |
|---|---|---|---|
| DE 102019207061 A1 | 19-11-2020 | DE 102019207061 A1<br>WO 2020229050 A1 | 19-11-2020<br>19-11-2020 |

EPO FORM P0461

Für nähere Einzelheiten zu diesem Anhang : siehe Amtsblatt des Europäischen Patentamts, Nr.12/82